# EUROPÄISCHE PATENTSCHRIFT

(11) **EP 0 547 417 B1**
(45) Veröffentlichungstag und Bekanntmachung des Hinweises auf die Patenterteilung: **28.06.1995**
(21) Anmeldenummer: 92120397.2
(22) Anmeldetag: 30.11.1992
(51) Int. Cl.: B23K 9/06, B23K 9/09

(54) **Verfahren und Vorrichtung zum Wiederzünden eines Lichtbogens bei einem Schutzgasschweissverfahren**
Method and device for refining an arc during welding with protection gases
Méthode et appareil pour le réallumage de l'arc lors d'un soudage avec gaz de protection

(30) Priorität: 16.12.1991 AT 2493/91
(43) Veröffentlichungstag der Anmeldung: 23.06.1993
(73) Patentinhaber: FRONIUS SCHWEISSMASCHINEN KG AUSTRIA, A-4600 Wels/Thalheim (AT)
(72) Erfinder: Pammer, Walter, A-4540 Bad Hall (AT); Freiseisen, Bernhard, A-4600 Wels (AT)
(74) Vertreter: Secklehner, Günter, Dr.

(56) Entgegenhaltungen:
- EP-A- 0 325 785
- WO-A-81/00799
- PATENT ABSTRACTS OF JAPAN vol. 15, no. 325 (M-1148)19. August 1991
- PATENT ABSTRACTS OF JAPAN vol. 6, no. 97 (M-134)5. Juni 1982

## Beschreibung

Die Erfindung betrifft ein Verfahren und eine Vorrichtung zum Zünden des Lichtbogens bei einem elektrischen Schweißverfahren mittels einer nicht abbrennenden Wolframelektrode.

Es ist bereits ein Verfahren und eine Vorrichtung zum Zünden des Lichtbogens gemäß JP-A-31 24 373 bekannt. Bei diesem Verfahren und der Vorrichtung wird an ein Werkstück und an eine Elektrode jeweils eines der beiden Potentiale einer Wechselspannungsquelle angelegt. Durch die Verwendung der Wechselspannung zum Schweißen bricht beim Nulldurchgang der Wechselspannung die Stromversorgung für den Lichtbogen zusammen und ist daher der Lichtbogen nach jedem Nulldurchgang neu zu zünden. Zu diesem Zweck ist nach diesem Verfahren und der Vorrichtung vorgesehen, daß der normalen Wechselspannung für den Schweißstrom ständig eine hochfrequente Spannung überlagert ist, die nach Zusammenbruch des Lichtbogens eine sofortige Wiederzündung des Lichtbogens ermöglicht. Die ständige angelegte Hochfrequenzspannung führt jedoch bei den modernen elektrischen Geräten, insbesondere den elektronischen Steuerungen derartiger Schweißvorrichtungen zu ständigen Störungen und damit zum Ausfall des Schweißgerätes.

Bei einem bekannten derartigen Verfahren wird über eine Inverterstromquelle der Schweißstelle eine Gleichspannung zugeführt. Mit gegengleich getakteten Schaltvorrichtungen wird die Gleichspannung in rechteckförmige Wechselspannung zerhackt. Derartige bekannte Schweißvorrichtungen weisen weiters einen Hochfrequenzgenerator auf, der an die beiden Elektroden der Schweißvorrichtung angeschlossen ist. Nachteilig bei solchen Schweißvorrichtungen ist, daß die elektronischen Geräte in der Umgebung dieser Schweißvorrichtung durch die ständige Verwendung des Hochfrequenzgenerators zum Wiederzünden des Lichtbogens nach jedem Nulldurchgang der Schweißspannung stark gestört werden und dieser Hochfrequenzgenerator sehr störungsanfällig ist. Beim Ausfall des Hochfrequenzgenerators ist aber ein Schweißen mit der Schweißvorrichtung nicht möglich.

Der vorliegenden Erfindung liegt die Aufgabe zugrunde, ein Schweißverfahren für den Einsatz von nicht abschmelzenden Wolframelektroden zu schaffen, bei welchen eine Störung von anderen Vorrichtungen, insbesondere elektronischen Geräten nahezu vermieden wird und die gute Schweißergebnisse beim Einsatz eines WIG-Schweißverfahrens ermöglicht.

Diese Aufgabe der Erfindung wird durch die im Kennzeichenteil des Patentanspruches 1 angegebenen Maßnahmen gelöst. Vorteilhaft ist bei dieser Lösung, daß der Hochfrequenzgenerator nur für eine ganz kurze Zeitspanne beim Starten des Schweißvorganges benötigt wird und daß dann ein sogenanntes eigenstabiles System geschaffen wird. Dieses ermöglicht von sich aus ohne weitere zusätzliche Schaltvorgänge oder Steuermaßnahmen ein ständiges Wiederzünden des Lichtbogens jeweils beim Nulldurchgang des Stroms bzw. der Spannung der rechteckförmig pulsierenden Wechselspannung. Dadurch werden Beeinflussungen und Störungen verschiedener Steuervorrichtungen und im Bereich der Schweißvorrichtung eingesetzten, elektronischen Geräten vermieden. Durch die gesicherte Zündung ohne Einsatz einer Hochfrequenz wird auch ein ruhigeres Schweißbad und damit eine verbesserte Schweißung erzielt.

Vorteilhafte weitere Maßnahmen sind im Patentanspruch 2 gekennzeichnet. Durch die Einspeisung einer Hilfsspannung ist es in einfacher Weise möglich das benötigte Spannungsniveau unabhängig von der Strom- und Spannungsversorgung der Schweißvorrichtung zur Verfügung zu stellen bzw. rascher wiederherzustellen, sodaß auch bei hohen Zerhackerfrequenzen einwandfreie Wiederzündungen des Lichtbogens erzielt werden.

Weitere vorteilhafte Maßnahmen sind im Kennzeichenteil des Patentanspruches 3 gekennzeichnet. Vorteilhaft ist dabei, daß die Zündspannung die Grenzwerte der Energiebelastung der verwendeten Bauteile nicht überschritten werden können.

Eine weitere Vorgangsweise nach Patentanspruch 4 ermöglicht die rasche Anpassung des für unterschiedliche Materialien benötigten Spannungswertes für die Wiederzündung des Lichtbogens.

Vorteilhaft sind auch die weiteren Maßnahmen nach Patentanspruch 5, da dadurch der Hochfrequenzgenerator nur dann eingesetzt wird, wenn beispielsweise die im magnetischen Energiespeicher gespeicherte Energie noch nicht ausreicht, um im Nulldurchgang des Schweißstroms eine ausreichend rasche Zunahme der Schweißspannung zu ermöglichen, die ein sofortiges Wiederzünden des Lichtbogens bewirkt.

Die Erfindung umfaßt weiters auch eine Schweißvorrichtung zur Durchführung des Verfahrens wie sie im Oberbegriff des Patentanspruches 6 gekennzeichnet ist.

Diese Schweißvorrichtung ist durch die im Kennzeichenteil des Patentanspruches 6 angegebenen Merkmale gekennzeichnet. Durch diese scheinbare einfache, jedoch überraschende und wirkungsvolle Lösung wird nunmehr erreicht, daß durch die Anordnung der Hilfsstromquelle sich der magnetische Energiespeicher bis auf das Niveau der gewünschten Zündspannung aufladen kann und so bei jedem Nulldurchgang des Schweißstroms eine ausreichende Energie zur Abgabe eines Zündimpulses an die Elektroden vorhanden ist. Dadurch wird ein eigenstabiles System geschaffen, bei welchem Hochspannungsimpulse zum Zünden beim Nulldurchgang des Schweißstromes und damit eine weitgehend Störung von elektronischen Geräten ausgeschaltet und vermieden wird.

Es ist aber auch ein Vorgehen nach Patentanspruch 7 möglich, wodurch ein Energieabbau im Energieverbraucher nur dann erfolgt, wenn die voreinstellbare Zündspannung überschritten wird. Damit werden während des laufenden Betriebs, in welchen sich die Zündspannung in dem vorgesehenen Spannungsbereich bewegt, Energieverluste des Verfahrens verhindert. Dazu kommt, daß bei einem derartigen Aufbau mit standardmäßigen Bauteilen ohne erhöhte Sicherheitsanforderungen das Auslangen gefunden werden kann.

Durch die weitere Ausgestaltung nach Patentanspruch 8 wird schließlich sichergestellt, daß der Hochfrequenzgenerator zum Wiederzünden des Lichtbogens nur so lange eingesetzt wird, bis eine erstmalige Zündung des Lichtbogens erfolgt ist bzw. der Steuerkreis sich soweit elektrisch stabilisiert bzw. die elektrischen und magnetischen Energiespeicher soweit aufgeladen sind, daß die aufgebaute Energiereserve zum Aufbau der notwendigen Zündspannung beim Nulldurchgang des Schweißstromes ausreicht.

Die Erfindung wird im nachfolgenden anhand der in den Zeichnungen dargestellten Ausführungsbeispiele näher erläutert.

Es zeigen:
- Fig. 1: eine erfindungsgemäß ausgebildete Schweißvorrichtung in vereinfachter, schematischer Darstellung;
- Fig. 2: ein Schaltschema der erfindungsgemäßen Schweißvorrichtung;
- Fig. 3: ein Diagramm des Strom- und Spannungsverlaufes der erfindungsgemäßen Schweißvorrichtung im Bereich des Nulldurchganges des Schweißstroms bzw. der Schweißspannung;
- Fig.4: ein Diagramm des Strom- und Spannungsverlaufes der erfindungsgemäßen Schweißvorrichtung mit dem erfindungsgemäßen Zündimpuls für das Wiederzünden des Schweißlichtbogens nach dem Nulldurchgang der Schweißspannung bzw. des Schweißstroms.

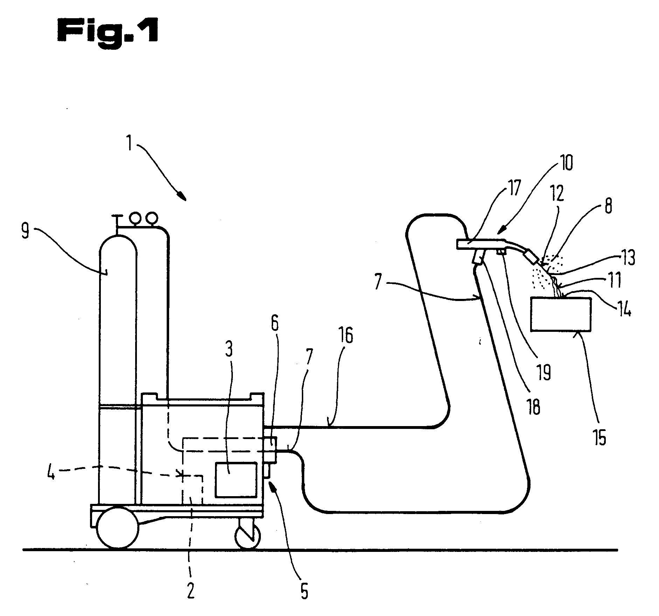

In Fig. 1 ist eine Schweißvorrichtung 1 zum WIG-Schweißen gezeigt. Diese Schweißvorrichtung 1 umfaßt eine Inverterstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, beispielsweise Stickstoff, Helium oder Argon und dgl., von einem Gasspeicher 9 einem Schweißbrenner 10 zugeführt werden kann.

Der Strom zum Aufbaue eines Lichtbogens 11 zwischen einer nichtabschmelzenden, aus Wolframstahl (Wolfram) 12 bestehenden Elektrode 13 und einem mit einer weiteren Elektrode 14 kontaktierten Werkstück 15, wird über Versorgungsleitungen 16 vom Leistungsteil 3 der Inverterstromquelle 2 zugeführt. Zum Herstellen der Schweißnaht kann beispielsweise ein eigenes Zusatzmaterial zugeführt werden.

Zum temporären Verschließen bzw. zum Unterbrechen der Gaszufuhr in der Versorgungsleitung 7 ist im Bereich des Schweißbrenners 10, insbesondere in einem Handgriff 17 desselben ein Rückschlagventil 18 zur Absicherung der Gasleitung vorgesehen. Weiters ist am Handgriff 17 ein Betätigungsorgan 19 zum Einleiten des Schweißvorganges, insbesondere zur Aktivierung der Steuervorrichtung 4 bzw. des Leistungsteils 3 und des damit verbundenen Steuerventiles 6, angeordnet.

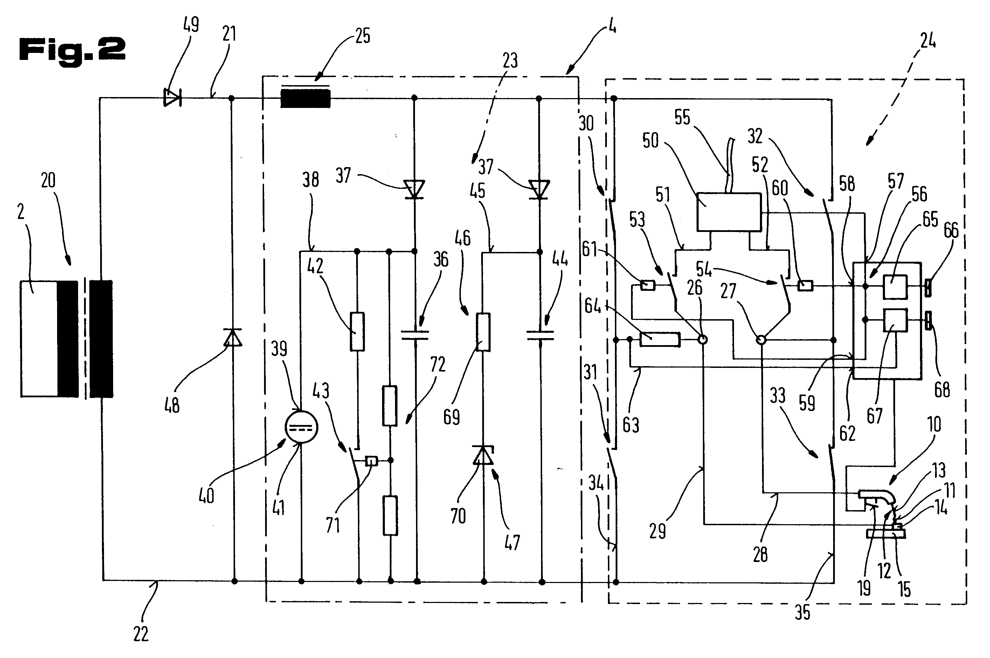

In Fig.2 ist ein Schaltschema einer Steuervorrichtung 4 zur Erzeugung der Zündspannung für die Schweißvorrichtung 1 gezeigt.

Die Steuervorrichtung 4 wird über einen Umformer 20 von der Inverterstromquelle 2 über Versorgungsleitungen 21,22 mit Energie versorgt. Die Steuervorrichtung 4 umfaßt einen Steuerkreis 23 und eine Schaltvorrichtung 24. Zwischen dem Steuerkreis 23 und der Inverterstromquelle 2 ist in der Versorgungsleitung 21 ein magnetischer Energiespeicher 25 angeordnet.

An Ausgängen 26,27 der Schaltvorrichtung 24 sind die Elektroden 13,14 über Ausgangsleitungen 28,29 angeschlossen.

In der Schaltvorrichtung 24 sind vier Schalter 30,31,32,33 angeordnet. Die Schalter 30 und 31 bzw. 32 und 33 sind jeweils in einer die beiden Versorgungsleitungen 21,22 bildenden Verbindungsleitung 34,35 in Serie geschaltet. Die Verbindungsleitungen 34 und 35 sind dabei parallel zueinander angeordnet. Die Verbindungsleitung 34 ist zwischen den beiden Schaltern 30,31 mit dem Ausgang 26 und die Verbindungsleitung 35 zwischen den Schaltern 32,33 mit dem Ausgang 27 verbunden.

Im Steuerkreis 23 der parallel zur Schaltvorrichtung 24 angeordnet ist, ist zumindest ein elektrischer Energiespeicher 36 parallel zum Umformer 20 geschaltet. Zwischen dem elektrischen Energiespeicher 36 und dem magnetischen Energiespeicher 25 ist eine den Stromdurchgang in Richtung der Versorgungsleitung 21 sperrende Sperrvorrichtung 37 angeordnet. Zwischen der Sperrvorrichtung 37 und dem elektrischen Energiespeicher 36 mündet eine Speiseleitung 38, die an einem Ausgang 39 einer Hilfsspannungsquelle 40, die mit ihrem anderen Ausgang 41 an der Versorgungsleitung 22 angeschlossen ist.

Parallel zum elektrischen Energiespeicher 36 ist zur Begrenzung der Spannung der Hilfsspannungsquelle 40 ein Energieverbraucher 42 angeordnet, der mit der Speiseleitung 38 direkt und mit der Versorgungsleitung 22 unter Zwischenschaltung eines Schalters 43 verbunden ist.

Der Steuerkreis 23 kann gegebenenfalls nach einer nicht unbedingt zwingenden Weiterbildung mit einem weiteren zum elektrischen Energiespeicher 36 parallel geschalteten elektrischen Energiespeicher 44 versehen sein. In diesem Fall ist wiederum zwischen dem elektrischen Energiespeicher 44 und der Versorgungsleitung 21 eine Sperrvorrichtung 37 angeordnet, die einen Stromdurchgang in Richtung der Versorgungsleitung 21 unterbindet und einen Stromdurchgang von der Versorgungsleitung 21 in Richtung des Energiespeichers 44 ebenso wie beim elektrischen Energiespeicher 36 zuläßt. Zwischen dem elektrischen Energiespeicher 44 und der Sperrvorrichtung 37 mündet eine Verbraucherleitung 45, die zur Versorgungsleitung 22 führt, und in der in Serie ein Verbraucher 46 als Spannungsbegrenzungsglied 47 zwischengeschaltet ist.

Zusätzlich ist zur ordnungsgemäßen Funktion der Steuervorrichtung 4 parallel zum Umformer 20 vor dem magnetischen Energiespeicher 25 eine Glättungsdiode 48 angeordnet sein. Diese Glättungsdiode 48 wirkt mit der zwischen dem Umformer 20 und dem magnetischen Energiespeicher 25 angeordneten weiteren Glättungsdiode 49 zusammen.

Der vorerwähnte Energieverbraucher 42 kann gegebenenfalls ebenso wie der Verbraucher 46 durch einen Ohm'schen Widerstand gebildet sein. Die Hilfsspanungsquelle 40 kann beispielsweise durch eine über Solarzellen versorgte Batterie, durch eine über ein Ladegerät gespeiste Batterie oder über eine parallel zum Umformer 20 am Spannungsversorgungsnetz anliegende Stromquelle gebildet sein.

Die Schaltvorrichtung 24 umfaßt weiters einen Impulsgenerator 50, dessen Ausgänge über Leitungen 51,52 unter Zwischenschaltung von Schaltvorrichtungen 53,54 an den Ausgängen 26 und 27 der Schaltvorrichtung 24 anliegen. Zum Betrieb des Impulsgenerators 50 ist dieser über eine Leitung 55 an einer Stromversorgungsquelle, beispielsweise ein am Stromversorgungsnetz, unabhängig vom Umformer 20 angeschlossen. Die Ansteuerung des Impulsgenerators 50 und der Schaltvorrichtungen 53,54 erfolgt über eine Steuer- und Überwachungsvorrichtung 56. Ausgänge 57,58 und 59 sind über entsprechende Leitungen mit dem Impulsgenerator 50 bzw. fernbetätigbaren Antrieben 60,61 der Schaltvorrichtungen 53,54 verbunden. An der Steuer-und Überwachungsvorrichtung 56 liegt an einem Eingang 62 über eine Leitung 63 ein Meßwiderstand 64 an. Die Ausgänge 57 bis 59 sind in der Steuer- und Überwachungsvorrichtung 56 z.B. an einem Ausgang eines Zeitsteuergliedes 65 angeschlossen, dessen Reaktionszeit über ein Einstellorgan 66 entsprechend den jeweiligen Einsatzbedürfnissen verändert werden kann. Es ist aber anstelle dessen oder zusätzlich ebenso möglich, einen Ausgang eines Vergleichers 67, der ebenfalls mit einem Einstellorgan 68 für seine Schaltschwelle versehen sein kann, an die Ausgänge 57 bis 59 anzulegen, der gleichzeitig mit dem Eingang 62 vom Meßwiderstand 64 verbunden ist und im Schweißstromkreis liegt.

Der Impulsgenerator 50 wird dann eingeschalten und gleichzeitig die Schaltvorrichtungen 53 und 54 geschlossen, wenn bei geschlossenem Kontakt des Betätigungsorgans 19 am Schweißbrenner 10 über den Meßwiderstand 64 noch kein Stromfluß bzw. kein ausreichend hoher Stromfluß im Schweißstromkreis feststellbar ist. Dieses Starten des Impulsgenerators 50 bewirkt, daß der zerhackten Gleichspannung für den Schweißvorgang eine Hochfrequenzspannung überlagert wird, die am Beginn des Schweißvorganges das erstmalige Zünden des Lichtbogens 11 bewirkt.

Je nach der mit dem Einstellorgan 66 eingestellten Zeitdauer des Zeitsteuergliedes 65 wird nach wenigen Millisekunden der Impulsgenerator 50 wieder weggeschaltet bzw. wird parallel dazu oder unabhängig davon über den Vergleicher 67 aufgrund des Schweißstromanstieges am Meßwiderstand 64 das Abschalten des Impulsgenerators 50 ausgelöst.

Ab dem Moment, wo der Lichtbogen 11 gezündet ist, tritt nämlich die erfindungsgemäße Wirkung des Steuerkreises 23 bzw. der Schaltvorrichtung 24 in Kraft. So wird bei dem Aktivieren des Schweißvorganges von der Inverterstromquelle 2 über den Umformer 20 eine Gleichspannung induziert. Der Umformer 20 gibt diese Spannung an die Versorgungsleitungen 21,22 ab, wobei die Versorgungsleitung 21 den positiven Pol und die Versorgungsleitung 22 den negativen Pol bildet. Gleichzeitig wird auch die Schaltvorrichtung 24 versorgt. Diese erzeugt durch das wechselweise Schließen der Schalter 30 bis 33 eine rechteckförmige Wechselspannung. Die dazu notwendigen Schalt- und Steuervorrichtungen für die Herstellung dieser rechteckförmigen Wechselspannungen mit den Schaltern 30 bis 33 sind aus dem Stand der Technik allgemein bekannt. Beispielsweise kann eine Ausbildung gemäß den Ausführungen in der Zeitschrift "Die schweißtechnische Praxis" Band 11, zweite Auflage aus März 1980 erfolgen.

Um diese rechteckförmige Wechselspannung herzustellen wird immer ein Schalterpaar bestehend aus den Schaltern 30,33 gleichzeitig geschlossen und das andere Schalterpaar bestehend aus den Schaltern 31,32 geöffnet.

Die Funktion der erfindungsgemäßen Schweißvorrichtung ist nun wie folgt:
Wird über das Betätigungsorgan 19 am Schweißbrenner 10 der Schweißvorgang gestartet, so wird wie zuvor beschrieben, der Impulsgenerator 50 aktiviert und überlagert der durch den Umformer 20 hergestellten, von der Schaltvorrichtung 24 zerhackten Gleichspannung eine Hochfrequenzspannung, die zum Zünden des Lichtbogens 11 führt.

Je nach der mit dem Einstellorgan 66 eingestellten Zeitdauer des Zeitsteuergliedes 65 wird nach wenigen Millisekunden der Impulsgenerator 50 wieder weggeschaltet bzw. wird parallel dazu oder unabhängig davon über den Vergleicher 67 aufgrund des Schweißstromanstieges am Meßwiderstand 64 das Abschalten des Impulsgenerators 50 ausgelöst.

Um beim nachfolgenden Schweißvorgang jeweils beim Nulldurchgang des Schweißstromes ein Wiederzünden des Lichtbogens 11 zu garantieren ist es notwendig, eine ausreichend hohe Spannung schnell an die Elektroden 13,14 anzulegen. Diese hohe Spannung wird bei der erfindungsgemäß ausgebildeten Steuervorrichtung 4 durch den induktiven Energiespeicher 25 sichergestellt.

Da der elektrische Energiespeicher 36 über die Sperrvorrichtung 37 von der Schaltvorrichtung 24 entkoppelt ist und durch die Hilfsspannungsquelle 40 auf die Zündbrennspannung aufgeladen wird, kann während des Nulldurchgangs des Schweißstroms, nämlich dann, wenn alle vier Schalter 30 bis 33 geschlossen sind, über die Selbstinduktionsspannung des induktiven Energiespeichers 25, die Zündspannung selbst aufgebaut werden. Dieses Aufladen des induktiven Energiespeichers 25 wird noch dadurch unterstützt, daß die Inverterstromquelle 2 das Schließen aller Schalter 30 bis 33 als Kurzschluß erkennt und damit mehr Strom in die Versorgungsleitungen 21 und 22 einspeist. Der schnelle Spannungsanstieg im Steuerkreis 23 wird dadurch erreicht, indem der elektrische Energiespeicher 36 mit Hilfe der Hilfsspannungsquelle 40 und dem elektrischen Energiespeicher 36 auf einen erhöhten Spannungswert gehalten wird. Dadurch ist bis zur Erreichung dieser beiden Werte ein ungehindertes Ansteigen der Selbstinduktionsspannung im magnetischen Energiespeicher 25 möglich.

Wird nun eines der beiden Schalterpaare 31,32 oder 30 und 33 geöffnet, d.h. der Stromnulldurchgang ist beendet, wird die im magnetischen Energiespeicher 25 gespeicherte Energie in Form einer Zündspannung schlagartig der Schaltvorrichtung 24 zugeführt und dies führt an den Elektroden 13,14 zu einem raschen Anstieg der Zündspannung, wodurch der Stromanstieg der aus der Inverterstromquelle 2 geliefert wird, rascher erfolgen kann, und somit sofort eine Zündung des Lichtbogens 11 erzielt wird.

Um einen ausreichenden Schutz der Halbleiterbauteile in der Steuervorrichtung 4 zu gewährleisten, wird die Spannung an den elektrischen Energiespeicher 44 mit Hilfe des Verbrauchers 46 z.B. einem Widerstand 69 und dem Spannungsbegrenzungsglied 47, z.B. einer Zenerdiode 70 begrenzt. Die Begrenzung mit einem Widerstand und einer Zenerdiode ist aus dem Stand der Technik bekannt und bedarf daher keiner weiteren Erläuterung.

Um den elektrischen Energiespeicher 36 nicht mit der Hilfsspannung aus der Hilfsspannungsquelle 40 und durch Einflüsse in den Versorgungsleitungen 21,22 zu überladen, kann die überschüssige Energie durch das Schließen des Schalters 43 über den Energieverbraucher 42 an die negative Versorgungsleitung 22 verbraucht werden.

Das Schließen des Schalters 43 kann dabei über einen fernbetätigbaren Antrieb 71 erfolgen, der dann beaufschlagt ist, wenn der mittels einer Spannungsbrücke 72 vorgewählte Spannungswert zwischen der Speiseleitung 38 und der Versorgungsleitung 22 den voreinstellbaren Wert überschritten hat.

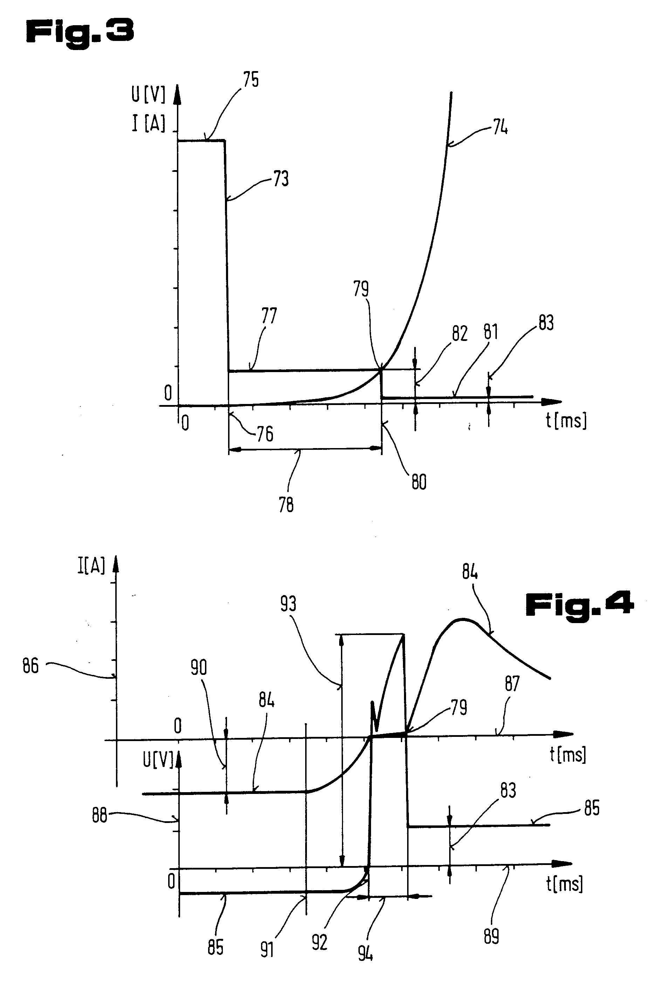

In Fig.3 ist eine Spannungs- und Stromkennlinie 73,74 bei der Zündung des Lichtbogens 11 ohne Impulsgenerator 50 dargestellt. Auf der Ordinate ist der Spannungs- und Stromwert in Volt bzw. Ampere aufgetragen, während auf der Abszisse die Zeit "t" in Millisekunden aufgetragen ist.

Bei diesen aus einem Versuch gewonnenen Spannungs- und Stromkennlinien 73 und 74 wurde nun so vorgegangen, daß an die Elektroden 13 und 14 eine konstante Spannung 75 angelegt wurde. Zum Zeitpunkt 76 wurde manuelle ein Zündimpuls ausgelöst, der zu einem Zusammenbruch der konstanten Spannung 75 auf eine Zündspannung 77 geführt hat. Gleichzeitig kommt es dabei zu einem Anstieg des Stroms entsprechend der Stromkennlinie 74 über eine Zeitdauer 78 nach der sich die Strom- und Spannungskennlinie 74,73 beim Erreichen eines bestimmten Stromwertes im Punkt 79 schneiden, in dem die vollständige Zündung des Lichtbogens 11 abgeschlossen ist und ein konstanter Lichtbogen 11 zwischen den beiden Elektroden 13 und 14 aufgebaut ist. In diesem Punkt 79, also zum Zeitpunkt 80, fällt dann die Zündspannung 77 auf eine Brennspannung 81 von einem Wert 82 der Zündspannung 77 auf einen Wert 83 der Brennspannung 81 ab und der Strom steigt entsprechend den voreingestellten Werten, die an der Schweißstelle benötigt werden exponentiell an und der Lichtbogen 11 erhält daraufhin die volle Leistung.

Aus Fig.4 ist nun im Gegensatz der den Strom- und Spannungsverlauf bei einer Versuchsanordnung zeigenden Darstellung einer Strom- und Spannungskennlinie 84 und 85 gezeigt, wobei die beiden Diagramme der Strom- und Spannungskennlinie 84 und 85 so aneinander geschoben wurden, daß sich die Strom- und Spannungskennlinien 84,85 teilweise überdecken, um das Verständnis für die Änderung des Strom und der Spannung in der Zeiteinheit übersichtlicher darzustellen.

Auf einer Ordinate 86 ist der Strom in Ampere aufgetragen, während auf einer Abszisse 87 die Zeit "t" in Millisekunden aufgetragen ist.

Das zweite Diagramm wird durch eine Ordinate 88, auf der die Spannung in Volt aufgetragen ist und eine dieser zugeordnete Abszisse 89, auf der die Zeit "t" in Millisekunden aufgetragen ist, gebildet.

Wie aus dem Verlauf der Stromkennlinie 84 zu ersehen ist, wird bei geschlossenen Schaltern 31 und 32 die im Diagramm zum Teil gezeigte negative Halbwelle mit einem Stromwert 90 geschaffen, der bei Schließen der weiteren Schalter 30,33 zum Zeitpunkt 91 geht nun der Stromwert 90 gegen Null. Während der Abnahme des Stromwertes 90 wird unter Verwendung des Steuerkreises 23 der magnetische Energiespeicher 25 aufgeladen und es wird nun die im magnetischen Energiespeicher 25 gespeicherte Energie in Form der Zündspannung beim Öffnen der Schalter 30 und 33 zu einem Zeitpunkt 92 die Zündspannung 77 mit einem Wert 93, der der Zündspannung 77 nach der Darstellung in Fig.3 entspricht, der Schweißstelle, bzw. den Elektroden 13,14 zugeführt, die über eine Zeitdauer 94 aufrecht erhalten wird und zwar solange, bis sich gemäß der Darstellung in Fig.3 die Stromkennlinie 84 im Punkt 79 beim Erreichen des Stromwertes schneiden, worauf es zu einem starken Abfall der Zündspannung 77 auf den Wert 83 kommt und demgegenüber der Strom an der Schweißstelle, d.h. zwischen den Elektroden 13,14 stark ansteigt. Dadurch ist die Zündung des Lichtbogens 11 wieder erfolgt und der Schweißvorgang kann bis zum nächsten Nulldurchgang wieder fortgesetzt werden, in welchem sich der Ablauf zum Aufbau der Zündspannung 77 jedoch nur durch Schließen und Öffnen der anderen Schaltgruppe erfolgt.

Der Ordnung halber sei an dieser Stelle erwähnt, daß die Darstellung der Spannungs-und Stromkennlinie 73 und 74 bzw. 85 und 84 maßstäblich stark verzerrt und teilweise übertrieben dargestellt wurde, um die Lage der Schnittpunkte aufgrund des reduzierten Maßstabes der Darstellung überhaupt ersichtlich zu machen.

Im Rahmen der Erfindung ist es selbstverständlich auch möglich, Schaltungsdetails bzw. die dargestellten einzelnen Schaltungsteile durch aus dem Stand der Technik bekannte beliebige andere Schaltungsteile zu ersetzen und es können auch einzelne Baugruppen der Schaltung für sich eigenständige erfindungsgemäße Lösungen bilden.

Des weiteren wird darauf hingewiesen, daß es sich bei den dargestellten Schaltbildern um Blockschaltbilder handelt, in welchen einzelne Schaltungsdetails, die zur Stabilisierung der Spannung bzw. zur Vermeidung von Kurzschlüssen zusätzlich noch angeordnet werden können, nicht dargestellt sind.

### Bezugszeichenaufstellung

1 Schweißvorrichtung
2 Inverterstromquelle
3 Leistungsteil
4 Steuervorrichtung
5 Umschaltglied
6 Steuerventil
7 Versorgungsleitung
8 Gas
9 Gasspeicher
10 Schweißbrenner
11 Lichtbogen
12 Wolframstahl
13 Elektrode
14 Elektrode
15 Werkstück
16 Versorgungsleitung
17 Handgriff
18 Rückschlagventil
19 Betätigungsorgan
20 Umformer
21 Versorgungsleitung
22 Versorgungsleitung
23 Steuerkreis
24 Schaltvorrichtung
25 Energiespeicher
26 Ausgang
27 Ausgang
28 Ausgangsleitung
29 Ausgangsleitung
30 Schalter
31 Schalter
32 Schalter
33 Schalter
34 Verbindungsleitung
35 Verbindungsleitung
36 Energiespeicher
37 Sperrvorrichtung
38 Speiseleitung
39 Ausgang
40 Hilfsspannungsquelle
41 Ausgang
42 Energieverbraucher
43 Schalter
44 Energiespeicher
45 Verbraucherleitung
46 Verbraucher
47 Spannungsbegrenzungsglied
48 Glättungsdiode
49 Glättungsdiode
50 Impulsgenerator
51 Leitung
52 Leitung
53 Schaltvorrichtung
54 Schaltvorrichtung
55 Leitung
56 Steuer- und Überwachungsvorrichtung
57 Ausgang
58 Ausgang
59 Ausgang
60 Antrieb
61 Antrieb
62 Eingang
63 Leitung
64 Meßwiderstand
65 Zeitsteuerglied
66 Einstellorgan
67 Vergleicher
68 Einstellorgan
69 Widerstand
70 Zenerdiode
71 Antrieb
72 Spannungsbrücke
73 Spannungskennlinie
74 Stromkennlinie
75 Spannung
76 Zeitpunkt
77 Zündspannung
78 Zeitdauer
79 Punkt
80 Zeitpunkt
81 Brennspannung
82 Wert
83 Wert
84 Stromkennlinie
85 Spannungskennlinie
86 Ordinate
87 Abszisse
88 Ordinate
89 Abszisse
90 Stromwert
91 Zeitpunkt
92 Zeitpunkt
93 Wert
94 Zeitdauer

## Patentansprüche

1. Verfahren zur Wiederzündung eines Lichtbogens bei einem elektrischen Schutzgasschweißverfahren mit einer nicht verschmelzenden Elektrode aus Wolfram, insbesondere WIG-Verfahren, bei der am Werkstück und an der Elektrode jeweils eines der beiden Potentiale einer Wechselspannung anliegt, der zeitweise eine hochfrequente Zündspannung überlagert ist, dadurch gekennzeichnet, daß der Wechselspannung zur erstmaligen Zündung die hochfrequente Zündspannung überlagert wird bis der Lichtbogen (11) gezündet ist, wonach im Steuerkreis (23) ein induktiver Energiespeicher (25) während des Bestehens des Lichtbogens (11) zwischen der Elektrode (13) aus Wolfram (12) und dem Werkstück (15) und gleichzeitig über eine Hilfsspannungsquelle (40) ein zur Schweißstelle parallel geschal- teter, elektrischer Energiespeicher (36) aufgeladen wird und daß beim Nulldurchgang des Schweißstroms die im induktiven Energiespeicher (25) gespeicherte Energie mit der durch den elektrischen Energiespeicher (36) vordefinierten Spannung in die Schaltvorrichtung (24) eingespeist wird.

2. Verfahren nach Anspruch 1, dadurch gekennzeichnet, daß der Schweißstromkreis an einer Inverterstromquelle (2) anliegt und die um die Wechselspannung an der Inverterstromquelle (2) durch wechselweises Anspeisen der Elektrode (13) aus Wolfram (12) und des Werkstückes (15) mit dem Plus- oder Minuspol der Inverterstromquelle (2) hergestellt wird und daß die Entladung des induktiven Energiespeichers (25) während eines Umschaltvorganges der Elektrode (13,14) von einem Pol auf den anderen Pol der Inverterstromquelle (2) seine Energie an den Schweißstromkreis abgibt.

3. Verfahren nach Anspruch 1 oder 2, dadurch gekennzeichnet, daß die Überspannung der Zündspannung (77) in einem zum elektrischen Energiespeicher (36) parallel geschalteten Energiespeicher (44) mit einem zu diesem seriell angeordneten Verbraucher (46) begrenzt wird.

4. Verfahren nach einem oder mehreren der Ansprüche 1 bis 3, dadurch gekennzeichnet, daß der Spannungswert der Hilfsspannungsquelle (40) voreinstellbar ist.

5. Verfahren nach einem oder mehreren der Ansprüche 1 bis 4, dadurch gekennzeichnet, daß jede der beiden Elektroden (13,14) unter Zwischenschaltung von Schaltvorrichtungen (53,54) an je einem von zwei Ausgängen (26,27) eines Impulsgenerators (50) anliegt und daß das Schaltglied über eine Steuer- und Überwachungsvorrichtung (56) zur Überwachung des Schweißvorganges beaufschlagt wird.

6. Schweißvorrichtung mit einer Inverterstromquelle, einer dieser zugeordneten Steuervorrichtung, einer nicht abschmelzenden aus Wolfram Elektrode, die an einem Ausgang der Inverterstromquelle des Umwandlers an einem Potential derselben anliegt, und einer weiteren am Werkstück befestigten am anderen Potential des Umwandlers angeschlossenen Elektrode, bei der die Steuervorrichtung eine Schaltvorrichtung zum abwechselnden Anlegen der Elektroden an dem einen oder anderen Potential des Umformers aufweist und Schalter der Schaltvorrichtung über ein Taktschaltglied mit einstellbarer Frequenz beaufschlagt sind, insbesondere nach einem oder mehreren der Ansprüche 1 bis 5, dadurch gekennzeichnet, daß die Steuervorrichtung (4) einen zwischen einem Umformer (20) und der Schaltvorrichtung (24) angeordneten Steuerkreis (23) aufweist, in welchen in Serie zum Lichtbogen (11) zwischen diesen und dem Umformer (20) ein magnetischer Energiespeicher (25) angeordnet ist und zwischen dem magnetischen Energiespeicher (25) und der Schaltvorrichtung (24) parallel zu diesem ein elektrischer Energiespeicher (36) angeordnet ist und zwischen dem elektrischen Energiespeicher (36) und einer zwischen diesem und dem magnetischen Energiespeicher (25) angeordneten Sperrvorrichtung (37) ein Pol der Hilfsspannungsquelle (40) angeschlossen ist, deren anderer Pol am negativen Potential des Umformers (20) anliegt.

7. Schweißvorrichtung nach Anspruch 6, dadurch gekennzeichnet, daß ein weiterer elektrischer Energiespeicher (44) parallel zum an der Hilfsspannungsquelle (40) anliegenden elektrischen Energiespeicher (36) angeordnet ist, zwischen welchem und dem magnetischen Energiespeicher (25) eine weitere Sperrvorrichtung (37) und zwischen dieser und dem weiteren elektrischen Energiespeicher (44) sowie einem negativen Potential des Umformers (20) der Verbraucher (46) angeordnet ist.

8. Schweißvorrichtung nach Anspruch 6 oder 7, dadurch gekennzeichnet, daß dem Steuerkreis (23) und/oder der Schweißstelle bzw. dem Lichtbogen (11) und/oder den magnetischen oder elektrischen Energiespeichern (25,36) ein Meßorgan z.B. ein Meßwiderstand (64) zur Ermittlung der Stromstarke bzw. der Spannung oder des Ladezustandes zugeordnet ist und dieses an einer Steuer- und Überwachungsvorrichtung (56) anliegt und bei der Abgabe eines Signals vom Meßorgan die Schaltvorrichtungen (53,54) bzw. deren Antriebe (60,61) zum Öffnen der Schaltvorrichtungen (53,54) angesteuert sind.

## Claims

1. A method for the re-ignition of an arc during gas-shielded arc welding with a non-consumable tungsten electrode, in particular a TIG-welding process, wherein the workpiece and the electrode are in contact with one of the two potentials of an alternating voltage, said alternating voltage at times being superimposed by high-frequency ignition voltage, characterized in that the alternating voltage for the first ignition of the arc is superimposed by the high-frequency ignition voltage until the arc (11) is ignited, whereupon in the control circuit (23) during the existence of the arc (11) between the tungsten (12) electrode (13) and the workpiece (15) an inductive energy accumulator (25), and at the same time by means of an auxiliary voltage source (40) a parallel to the welding spot connected electric energy accumulator (36) is charged, and in that during the zero crossing of the welding current the energy stored in the inductive energy accumulator (25) is fed with the predetermined voltage of electric accumulator (36) into the switching arrangement (24).

2. A method according to claim 1, characterized in that the welding circuit is connected to an inverter source of current (2) and that the alternating voltage at the inverter source of current (2) is generated by alternate feeding of the tungsten (12) electrode (13) and the workpiece (15) with the positive or negative pole of the inverter source of current (2) and that the discharging of the inductive energy accumulator (25) occurs during a change-over step of the electrode (13, 14) from one pole of the inverter source of current (2) to the other, thus releasing its energy to the welding circuit.

3. A method according to claim 1 or 2, characterized in that the excess-voltage of the ignition voltage (77) in a parallel to the electric energy accumulator (36) connected energy accumulator (44) is limited by a consumer (46) placed in series in relation to said accumulator (44).

4. A method according to one or more of claims 1 to 3, characterized in that the voltage level of the auxiliary voltage source (40) can be preset.

5. A method according to one or more of claims 1 to 4, characterized in that each of the two electrodes (13, 14) by interconnection of the switchgears (53, 54) sits close to one of the two exits (26, 27) of a pulse-generator (50) and that the respective switchgear is activated by a controlling and monitoring device (56) to control the welding process.

6. A welding equipment with an inverter source of current, a related control unit, a non-consumable tungsten electrode, which is connected to one exit of the inverter source of current of the converter and is in contact with one potential of same, and another electrode attached to the workpiece, which is in contact with the other potential of the converter, whose control unit is equipped with a switchgear for bringing the electrodes alternately into contact with one or the other potential of the converter, and which activates the circuit breakers of the switchgear by a cycle generator with adjustable frequency, in particular according to one or more of claims 1 to 5, characterized in that the control unit (4) comprises a control circuit (23) between a converter (20) and the switching arrangement (24), wherein in series to the arc (11) between said arc and the converter (20) a magnetic energy accumulator (25) is placed, and between the magnetic energy accumulator (25) and the switching arrangement (24) parallel to said accumulator an electric energy accumulator (36) is placed, and between the electric energy accumulator (36) and a locking device (37), arranged between said accumulator and the magnetic energy accumulator (25), one pole of the auxiliary voltage source (40) is connected whose other pole is in contact with the negative potential of the converter (20).

7. A welding equipment according to claim 6, characterized in that a further electric energy accumulator (44) is placed parallel to the electric energy accumulator (36) which connects to the auxiliary voltage source (40), whereby there is between said accumulator and the magnetic energy accumulator (25) a further locking device (37) and a consumer (46) arranged between said device and the additional electric energy accumulator (44) as well as the negative potential of the converter (20).

8. A welding equipment according to claim 6 or 7, characterized in that to the control circuit (23) and/or the welding spot respectively the arc (11) and/or the magnetic or electric energy accumulators (25, 36) a measuring mechanism, for example a precision resistor (64), is associated to detect the intensity of current, respectively voltage or charging state and that this is connected to a controlling and monitoring device (56) and that at a signal given by the measuring device the switchgears (53, 54) respectively their drives (60, 61) are triggered for the opening of the switchgears (53, 54).

## Revendications

1. Procédé pour le réamorçage d'un arc électrique lors d'un procédé de soudage à l'arc sous protection gazeuse avec une électrode non fondante en tungstène, notamment procédé WIG, selon lequel on applique à la pièce à usiner et à l'électrode respectivement l'un des deux potentiels d'une tension alternative à laquelle est superposée temporairement une tension d'amorçage de haute fréquence, caractérisé en ce que la tension d'amorçage haute fréquence est superposée à la tension alternative pour le premier amorçage, jusqu'à ce que l'arc électrique (11) est amorcé, après quoi un accumulateur d'énergie inductif (25) est chargé pendant la présence de l'arc électrique (11) entre l'électrode (13) en tungstène (12) et la pièce à usiner (15) et simultanément est chargé un accumulateur d'énergie (36) par l'intermédiaire d'une source de tension auxiliaire (40), qui est montée en parallèle sur l'endroit de soudage, et en ce que, lors du passage par zéro du courant de soudage l'énergie stockée dans l'accumulateur d'énergie inductif (25) est transférée au dispositif de commutation (24) à la tension prédéterminée par l'accumulateur d'énergie électrique (36).

2. Procédé selon la revendication 1 caractérisé en ce que le circuit de courant de soudage est relié à une source d'inversion de courant (2) et que la tension alternative à la source d'inversion de courant (2) est engendrée par application alternative à l'électrode (13) en tungstène (12) et à la pièce d'usinage (15) du pôle + ou - de la source d'inversion de courant (2) et que la décharge de l'accumulateur d'énergie inductif (25) pendant un processus de commutation de l'électrode (13, 14) d'un pôle à l'autre de la source d'inversion de courant (2) fournit son énergie au circuit de courant de soudage.

3. Procédé selon l'une des revendications 1 ou 2 caractérisé en ce que la surtension de la tension d'allumage (77) est limitée dans un accumulateur d'énergie (44) monté en parallèle à l'accumulateur d'énergie électrique (36), avec une charge (46) montée en série à l'accumulateur (44).

4. Procédé selon l'une des revendications 1 à 3, caractérisé en ce que la valeur de tension de la source de tension auxiliaire (44) est susceptible d'être ajustée préalablement.

5. Procédé selon l'une des revendications 1 à 4, caractérisé en ce que chacune des deux électrodes (13, 14) est reliée respectivement à une des deux sorties (26, 27) d'un générateur d'impulsion (50) par l'intermédiaire de dispositif commutateur (53, 54), et que l'organe de commutation est sollicité par un dispositif de commande et de surveillance (56) pour la surveillance du processus de soudage.

6. Dispositif de soudage comprenant une source d'inversion de courant, un dispositif de commande associé à celle-ci, une électrode non-fondante en tungstène, qui est reliée à une sortie de la source d'inversion de courant du transformateur à un potentiel de celle-ci, et une autre électrode fixée à la pièce à usiner à l'autre potentiel du transformateur, où le dispositif de commande comprend un dispositif de commutation pour l'application alternative des électrodes à l'un ou l'autre potentiel du transformateur et des commutateurs du dispositif de commutation sont sollicités par un organe de commutation cadencé à une fréquence pré-ajustable, notamment selon l'une des revendications 1 à 5, caractérisé en ce que le dispositif de commande (4) comprend un circuit de commande (23) disposé entre un transformateur (20) et le dispositif commutateur (24) et dans lequel est prévu en série à l'arc électrique (11) entre celui-ci et le transformateur (20) un accumulateur d'énergie magnétique (25) et qu'un accumulateur d'énergie électrique (36) est disposé entre l'accumulateur d'énergie magnétique (25) et le dispositif de commutation (24), parallèlement à celui-ci, et qu'entre l'accumulateur d'énergie électrique (36) et un dispositif de blocage (37) disposé entre celui-ci et l'accumulateur d'énergie magnétique (25) est connecté à un pôle de la source de tension auxiliaire (40), dont l'autre pôle est appliqué au potentiel négatif du transformateur (20).

7. Dispositif de soudage selon la revendication 6, caractérisé en ce qu'un autre accumulateur d'énergie électrique (44) est monté en parallèle à l'accumulateur d'énergie (36) relié à la source de tension auxiliaire (40), entre lequel et l'accumulateur magnétique (25) est prévu un autre dispositif de blocage (37) et entre celui-ci et l'accumulateur d'énergie électrique supplémentaire (44) ainsi que le potentiel négatif du transformateur (20) est disposée la charge (46).

8. Dispositif de soudage selon la revendication 6 ou 7 caractérisé en ce qu'au circuit de commande (23) et/ou à l'endroit de soudage ou l'arc électrique (11) et/ou aux accumulateurs d'énergie magnétiques ou électriques (25, 36) est associé un organe de mesure, par exemple une résistance de mesure (64), pour la détermination de l'intensité de courant ou de la tension ou de l'état de charge et que celui-ci est relié à un dispositif de commande et de surveillance (56) et que, lors de l'émission d'un signal par l'organe de mesure, les dispositifs commutateurs (53, 54) ou leurs commandes (60, 61) sont commandés pour ouvrir les dispositifs commutateurs (53, 54).
